Europäisches Patentamt

European Patent Office

Office européen des brevets

(11) Veröffentlichungsnummer: **0 317 726 B1**

# EUROPÄISCHE PATENTSCHRIFT

(12)

(45) Veröffentlichungstag der Patentschrift: **02.12.92**

(21) Anmeldenummer: **88115425.6**

(22) Anmeldetag: **21.09.88**

(51) Int. Cl.⁵: **B60N 2/48**

(54) Sitz für ein Fahrzeug, Flugzeug oder dergleichen.

(30) Priorität: **24.11.87 DE 3739752**

(43) Veröffentlichungstag der Anmeldung:
**31.05.89 Patentblatt 89/22**

(45) Bekanntmachung des Hinweises auf die
Patenterteilung:
**02.12.92 Patentblatt 92/49**

(84) Benannte Vertragsstaaten:
**DE FR GB IT SE**

(56) Entgegenhaltungen:
**EP-A- 0 152 092**     **DE-C- 422 379**
**GB-A- 486 985**      **US-A- 3 012 819**
**US-A- 3 363 941**     **US-A- 3 795 021**

(73) Patentinhaber: **Dr.Ing.h.c. F. Porsche Aktiengesellschaft
Porschestrasse 42
W-7000 Stuttgart 40(DE)**

(72) Erfinder: **Grossmann, Kay, Dr.
Heckenweg 12
W-7251 Flacht(DE)**

Rank Xerox (UK) Business Services

## Beschreibung

Die Erfindung betrifft einen Sitz für ein Fahrzeug, Flugzeug oder dergleichen der ein Sitzteil und eine Rückenlehne umfaßt, wobei die Rückenlehne mit einer integrierten Kopfstütze versehen ist.

Ein Sitz der eingangs genannten Gattung ist aus der DE-A-2 622 556 bekannt. Die Rückenlehne ist dabei soweit hochgezogen, daß ihr oberer Endbereich eine integrierte Kopfstütze bildet. Bei diesem Sitz sind keine Vorkehrungen getroffen, die Lendenwirbelsäulen-Lordose und die Halswirbelsäulen-Lordose des Sitzbenutzers im Fahrbetrieb wirkungsvoll zu unterstützen.

Aus der DE-A-3 205 859 geht ein Sitz für ein Kraftfahrzeug hervor, der ein Abstützsystem für den Lumbalbereich einer auf dem Fahrzeugsitz sitzenden Person aufweist. Bei dieser Anordnung wird also lediglich der Bereich der Lendenwirbelsäulen-Lordose des Sitzinsassen durch ein Luftkissen unterstützt, das in die Rückenlehne integriert ist. Maßnahmen zur Abstützung der Halswirbelsäulen-Lordose des jeweiligen Sitzbenutzers sind auch bei dieser Anordnung nicht vorgesehen.

Aufgabe der Erfindung ist es, an einem Sitz mit einer in die Rückenlehne integrierten Kopfstütze solche Vorkehrungen zu treffen, daß der Bereich der Halswirbelsäulen-Lordose des jeweiligen Sitzinsassen im Fahrbetrieb wirkungsvoll unterstützt wird und daß andererseits Verletzungen der Halswirbelsäule bei einem Aufprall (von vorn, hinten oder seitlich) zumindest gemindert werden.

Erfindungsgemäß wird diese Aufgabe durch die kennzeichnenden Merkmale des Anspruchs 1 gelöst. Weitere, die Erfindung in vorteilhafter Weise ausgestaltende Merkmale sind in den Unteransprüchen enthalten.

Die mit der Erfindung hauptsächlich erzielten Vorteile sind darin zu sehen, daß durch die Anordnung eines stufenlos veränderbaren Vakuumkissens an der Rückenlehne, und zwar im Bereich der Kopfstütze, eine wirkungsvolle Unterstützung der Halswirbelsäulen-Lordose des jeweiligen Sitzinsassens erzielt wird. Durch diese Unterstützung tritt auch bei längerer Fahrt kein Ermüdungseffekt der Halsmuskulatur auf. Außerdem werden Verspannungen der Nacken-, Hals-, Schulter- und Armmuskulatur weitgehend vermieden. Darüber hinaus wird bei einem Aufprall die Beugung bzw. Streckung sowie die laterale Achsverschiebung der Halswirbelsäule minimiert. Durch das veränderbare Vakuumkissen wird eine individuelle, modellierbare Kopfstütze geschaffen, so daß für unterschiedliche Sitzinsassen jeweils eine optimierte Einstellung gefunden werden kann. Durch die im Vakuumkissen angeordneten kleinen Kunststoffteilchen wird bei einem Crash der Kopf weicher abgefangen und damit Verletzungen oder Zerrungen der Halswirbelsäule prophylaktisch vorgebeugt.

Ein Ausführungsbeispiel der Erfindung ist in der Zeichnung dargestellt und wird im folgenden näher erläutert.

Es zeigt

Fig. 1      eine Schrägansicht auf einen Sitz für ein Fahrzeug, Flugzeug oder dergleichen,

Fig. 2      eine Schrägansicht auf die Rückenlehne des Sitzes mit dem erfindungsgemäßen Vakuumkissen, teilweise im Schnitt,

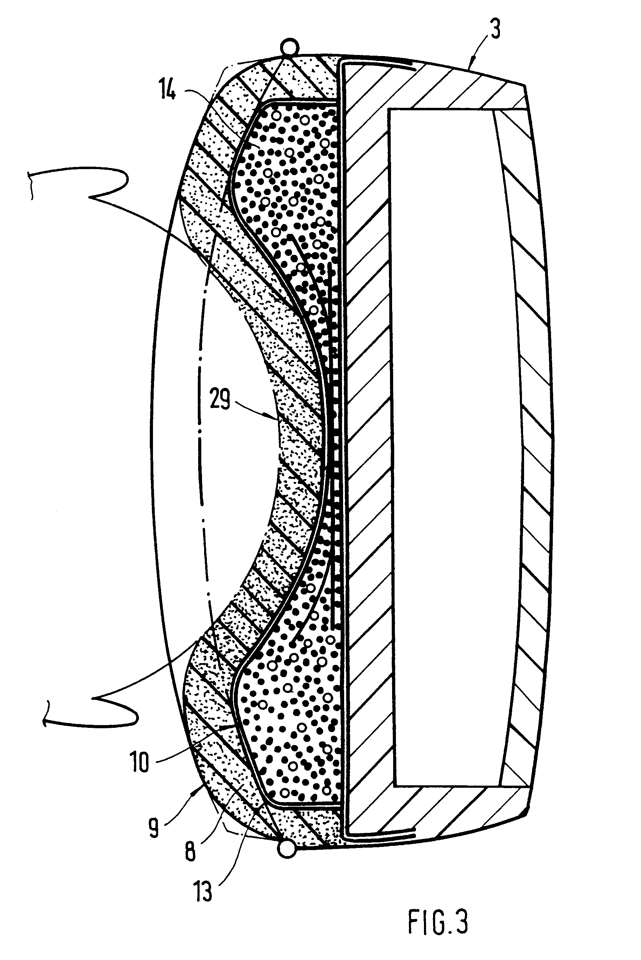

Fig. 3      einen Schnitt nach der Linie III-III der Fig. 2 in größerem Maßstab,

Fig. 4      einen Schnitt nach der Linie IV-IV der Fig. 2 in größerem Maßstab,

Fig. 5      ein Schaltbild zur Steuerung des veränderbaren Vakuumkissens.

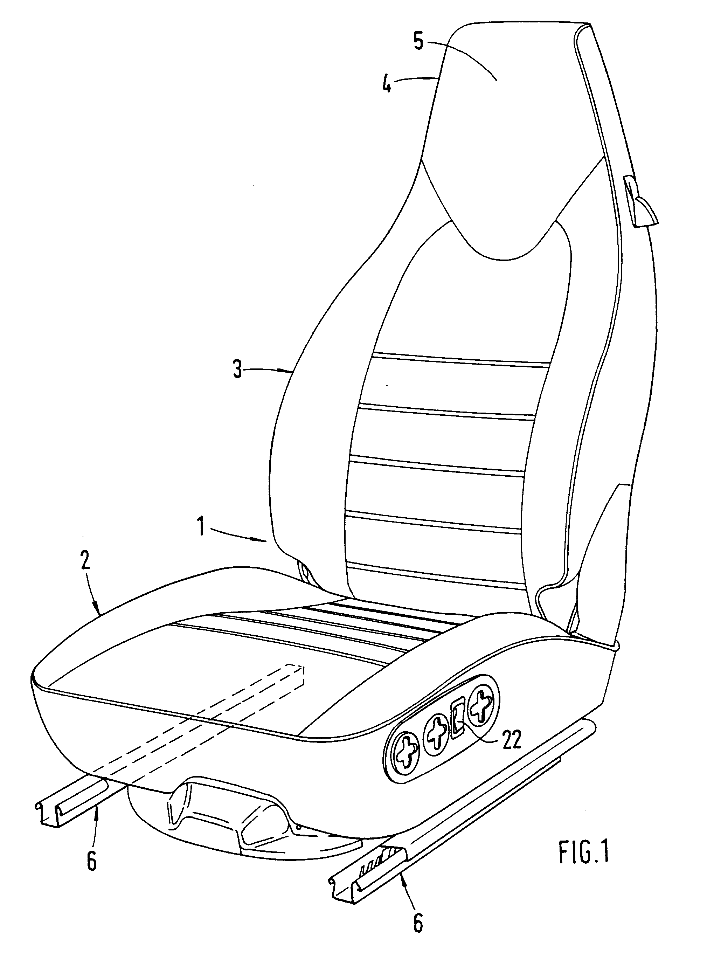

Der in Fig. 1 dargestellte Sitz 1 für ein Fahrzeug, Flugzeug oder dergleichen umfaßt ein Sitzteil 2, das unter Vermittlung von nicht gezeigten Verstellbeschlägen mit einer neigungsverstellbaren Rückenlehne 3 verbunden ist. Ein oberer Endbereich 4 der Rückenlehne 3 ist als feststehende, integrierte Kopfstütze 5 ausgebildet. Das Sitzteil 2 ist unter Vermittlung von sich in Fahrzeuglängsrichtung erstreckenden Führungsschienen 6 verschiebbar am angrenzenden, nicht näher dargestellten Aufbau gelagert.

Die Rückenlehne 3 besteht im wesentlichen aus einem Lehnenrahmen 7, einer Schaumstofflage 8 und einem dekorativen Sitzbezug 9. Außerdem ist an der Rückenlehne 3 im Bereich der Kopfstütze 5 ein in bestimmten Grenzen stufenlos veränderbares Vakuumkissen 10 vorgesehen, das zur Unterstützung der Halswirbelsäulen-Lordose 11 und des Kopfbereiches von Sitzinsassen 12 unterschiedlicher Größe und Körperform dient.

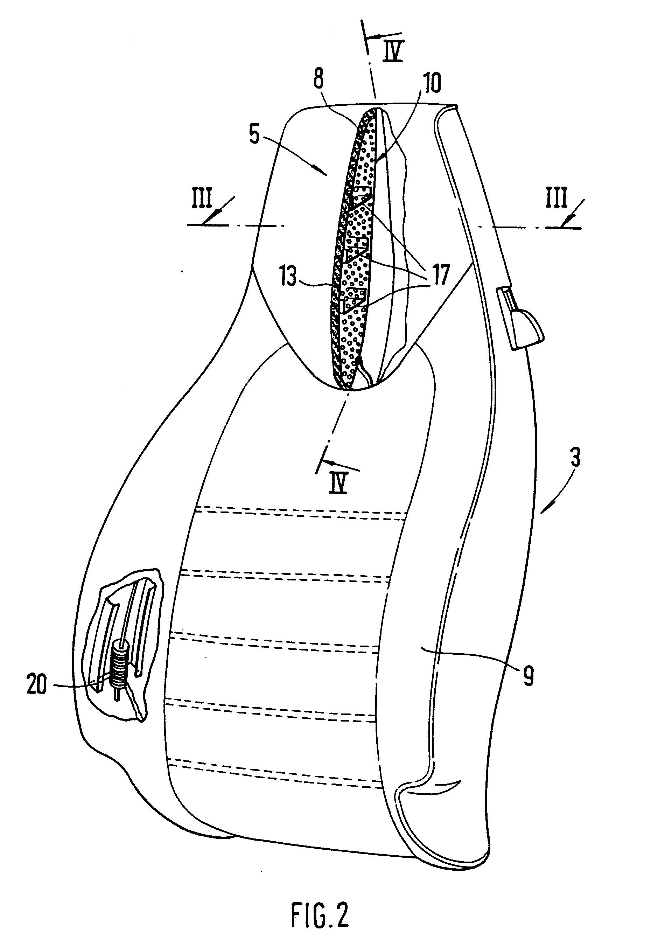

Das Vakuumkissen 10 ist zwischen der Schaumstofflage 8 und der dem Sitzinsassen 12 zugekehrten Seite des Lehnenrahmens 7 angeordnet. Gemäß Fig. 2 umfaßt das Vakuumkissen 10 eine luftundurchlässige Hülle 13, in der eine Vielzahl von kleinen Kunststoffteilchen 14, z. B. Polystyrol-Kügelchen, angeordnet sind. Die aus zwei Hälften 15, 16 zusammengesetzte Hülle 13 ist umfangsseitig mit dem Lehnenrahmen 7 fest verbunden, beispielsweise durch Kleben.

Zur Positionierung der Kunststoffteilchen 14 sind innerhalb der Hülle 13 in Höhenrichtung gesehen, mehrere übereinanderliegende Lamellen 17 angeordnet, die im Querschnitt gesehen, U-förmig ausgebildet sind und an ihren beiden Enden fest mit der Innenseite der Hülle 13 verbunden sind. Die aus flexiblem Kunststoff gefertigten Lamellen 17 weisen eine Vielzahl von Luftdurchtrittsöffnungen 18 auf, wobei diese eine solche Größe aufweisen, daß ein Absinken der Kunststoffteilchen 14 verhindert, ein Hindurchströmen von Luft jedoch ermöglicht wird.

Die Hülle 13 ist im unteren Bereich über eine Schlauchleitung 19 einerseits mit einer Extraktionspumpe 20 und andererseits mit einem Ventil 21 verbunden, wobei die Extraktionspumpe 20 und das Ventil 21 von einem Tastschalter 22, der am Sitz angebracht ist, wechselweise ansteuerbar sind. Die Extraktionspumpe 20 ist im Ausführungsbeispiel elektrisch angetrieben. Die Extraktionspumpe 20 und das Ventil 21 sind an einem Seitenholm des Lehnenrahmens 7 der Rückenlehne angeordnet.

Das Ventil 21, das unangesteuert geschlossen ist, ist in einer Abzweigung 23 der Schlauchleitung 19 angeordnet und vorzugsweise als Elektromagnetventil ausgebildet. Nach der Abzweigung 23 ist in der Schlauchleitung 19 vor der Extraktionspumpe 20 ferner ein Rückschlagventil 24 angeordnet, das dafür sorgt, daß die Luft lediglich in Richtung der Extraktionspumpe 20 hindurchströmen kann.

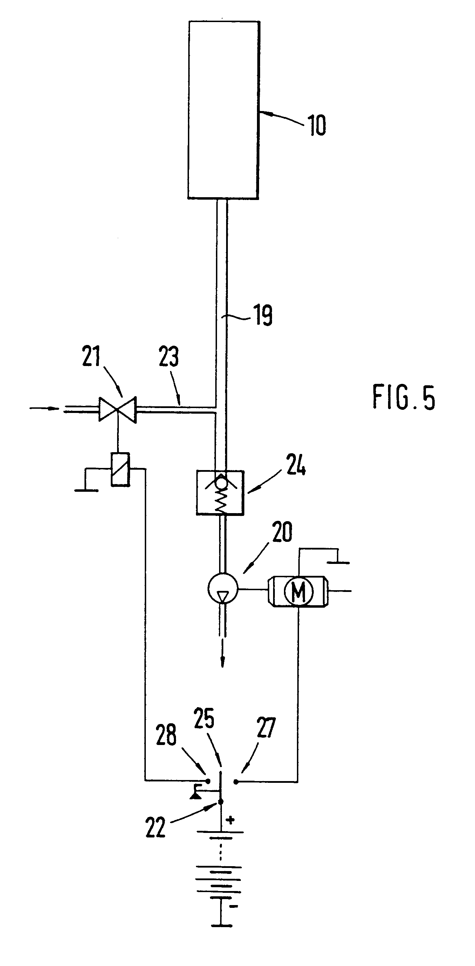

Fig. 5 zeigt ein Schaltbild zur Steuerung des veränderbaren Vakuumkissens. Der Tastschalter 22 nimmt dabei eine neutrale Mittelstellung ein. Das Ventil 21 ist in der Mittelstellung des Tastschalters 22 geschlossen und die Extraktionspumpe 20 ist außer Betrieb.

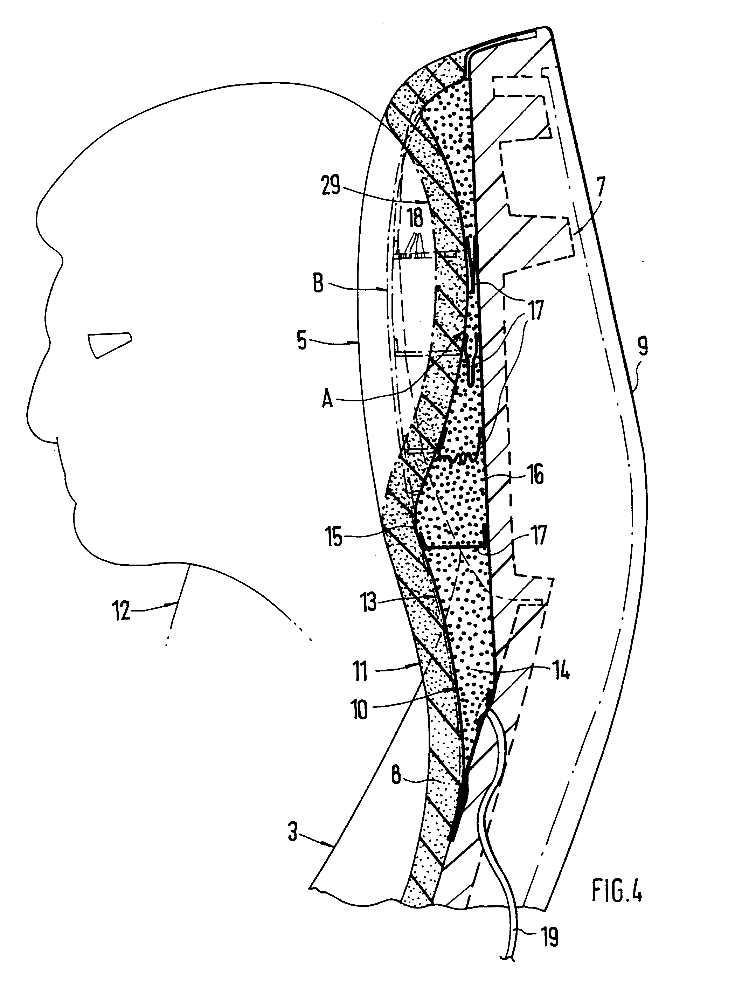

Soll nun Luft aus dem Vakuumkissen evakuiert werden so wird der Tastschalter 22 in der Weise betätigt, daß das Schaltglied 25 des Tastschalters 22 am Kontakt 27 anliegt. Dadurch wird der Elektromotor der Extraktionspumpe 20 angesteuert und die Luft aus dem Vakuumkissen 10 herausgesaugt. Durch das Evakuieren der Luft werden die Kunststoffteilchen dergestalt verdichtet, daß die Halswirbelsäulen-Lordose 11 und der Hinterkopfbereich 29 des Sitzinsassen 12 wirkungsvoll abgestützt wird. Diese Stellung ist in Fig. 4 strichpunktiert gezeigt (Stellung A). Die Lamellen 17 verformen sich dabei in Fahrzeuglängsrichtung.

Zum Aufblasen des Vakuumkissens 10 wird der Tastschalter 22 in die andere Richtung bewegt, so daß das Schaltglied 25 am Kontakt 28 anliegt. Hierdurch öffnet sich das Ventil 21 und die Luft aus der Umgebung strömt durch die Abzweigung 23 und die Schlauchleitung 19 in das Vakuumkissen 10 hinein, bis dieses seine gewünschte Form aufweist. Die voll aufgeblasene Stellung des Vakuumkissens 10 ist in Fig. 4 mit dem Bezugszeichen B gekennzeichnet. In der Stellung B ist das Vakuumkissen 10 relativ weich, wogegen in der Stellung A das Vakuumkissen 10 relativ hart eingestellt ist. In der Stellung A ist der Hinterkopfbereich 29 des Sitzinsassen 12 sowohl in Höhen- als auch in Fahrzeugquerrichtung fixiert. Das Vakuumkissen 10 kann wahlweise die Stellung A, die Stellung B und sämtliche dazwischenliegenden Stellungen einnehmen.

**Patentansprüche**

1. Sitz für ein Fahrzeug, Flugzeug oder dergleichen, der ein Sitzteil und eine Rückenlehne umfaßt, wobei die Rückenlehne mit einer integrierten Kopfstütze versehen ist, dadurch gekennzeichnet, daß an der Rückenlehne (3) im Bereich der Kopfstütze (5) ein stufenlos veränderbares Vakuumkissen (10) angeordnet ist, das mittels einer Extraktionspumpe (20) und wenigstens eines Ventils (21, 24) der physiologischen Halswirbelsäulen-Lordose des jeweiligen Sitzbenutzers (12) individuell anpaßbar ist.

2. Sitz nach Anspruch 1, dadurch gekennzeichnet, daß das Vakuumkissen (10) eine Hülle (13) aus luftundurchlässigem Material umfaßt, wobei innerhalb der Hülle (13) eine Vielzahl von kleinen Kunststoffteilchen (14) angeordnet ist.

3. Sitz nach Anspruch 1, dadurch gekennzeichnet, daß die Hülle (13) umfangsseitig an einem Lehnenrahmen (7) der Rückenlehne (3) befestigt ist.

4. Sitz nach Anspruch 2, dadurch gekennzeichnet, daß zur Positionierung der Kunststoffteilchen (14) innerhalb der Hülle (13) - in Höhenrichtung gesehen - mehrere übereinanderliegende, beabstandete Lamellen (17) angeordnet sind, wobei die Lamellen (17) eine Vielzahl von Luftdurchtrittsöffnungen (18) aufweisen.

5. Sitz nach Anspruch 1, dadurch gekennzeichnet, daß die Extraktionspumpe (20) und das Ventil (21) von einem Tastschalter (22) ansteuerbar sind, der am Sitz angebracht ist.

6. Sitz nach Anspruch 1, dadurch gekennzeichnet, daß die Extraktionspumpe (20) und das Ventil (21) an einem Seitenholm des Lehnenrahmens (7) der Rückenlehne (3) angeordnet sind.

7. Sitz nach Anspruch 1, dadurch gekennzeichnet, daß das Vakuumkissen (10) auf der dem Sitzinsassen (12) zugekehrten Seite des Lehnenrahmens (7) angeordnet ist, wobei dem Vakuumkissen (10) eine Schaumstofflage (8) vorgelagert ist.

**Claims**

1. A seat for a vehicle, aeroplane or the like, comprising a seat part and a backrest, the backrest being provided with an integrated head support, characterized in that a continuously variable vacuum cushion (10) is arranged on the backrest (3) in the region of the head support (5), which cushion is individually adaptable, by means of an extraction pump (20) and at least one valve (21, 24), to the physiological cervical vertebral-column lordosis of the respective user (12) of the seat.

2. A seat according to Claim 1, characterised in that the vacuum cushion (10) comprises an envelope (13) made of material impermeable to air, a plurality of small plastics-material particles (14) being arranged within the envelope (13).

3. A seat according to Claim 1, characterised in that the envelope (13) is fastened at the periphery to a frame (7) of the backrest (3).

4. A seat according to Claim 2, characterised in that, for positioning the plastics-material particles (14) within the envelope (13), several laminae (17) are arranged spaced apart and lying one above the other seen in a vertical direction, these laminae (17) having a plurality of air passage openings (18).

5. A seat according to Claim 1, characterised in that the extraction pump (20) and the valve (21) can be activated by a push switch (22) which is arranged on the side of the seat.

6. A seat according to Claim 1, characterised in that the extraction pump (20) and the valve (21) are arranged on a side strut of the frame (7) of the backrest (3).

7. A seat according to Claim 1, characterised in that the vacuum cushion (10) is arranged on the side of the backrest frame (7) facing the occupier (12) of the seat, a foam material layer (8) being mounted on the front of the vacuum cushion (10).

**Revendications**

1. Siège pour véhicule automobile, avion ou similaire, qui comporte une assise et un dossier, le dossier étant pourvu d'un appui-tête intégré, caractérisé en ce qu'il est prévu sur le dossier (3), dans la zone de l'appui-tête (5), un coussin à vide (10) réglable en continu qui peut être adapté individuellement à la lordose physiologique de la colonne vertébrale de l'utilisateur (12) du siège, au moyen d'un pompe à extraction (20) et d'au moins une vanne (21, 24).

2. Siège selon la revendication 1, caractérisé en ce que le coussin à vide (10) comprend une enveloppe (13) en matière imperméable à l'air, un grand nombre de petites particules de matière plastique 14 se trouvant à l'intérieur de l'enveloppe (13).

3. Siège selon la revendication 1, caractérisé en ce que l'enveloppe (13) est fixée sur son pourtour sur un cadre (7) du dossier (3).

4. Siège selon la revendication 2, caractérisé en ce que pour positionner les particules de matière plastique (14) à l'intérieur de l'enveloppe (13), il est prévu plusieurs lamelles (17) espacées, superposées - vues dans le sens de la hauteur - les lamelles (17) présentant un grand nombre d'orifices de passage d'air (18).

5. Siège selon la revendication 1, caractérisé en ce que la pompe à extraction (20) et la vanne (21) peuvent être commandées par une touche qui est placée sur le siège.

6. Siège selon la revendication 1, caractérisé en ce que la pompe à extraction (20) et la vanne (21) sont placées sur un côté du cadre (7) du dossier (3).

7. Siège selon la revendication 1, caractérisé en ce que le coussin à vide (10) est placé sur le côté, tourné vers le passager (12), du cadre (7) du dossier, une couche de mousse (8) étant placée devant le coussin à vide (10).

FIG.1

EP 0 317 726 B1

FIG.2

FIG.3

EP 0 317 726 B1

FIG.4

8

FIG.5